# EUROPEAN PATENT APPLICATION

(11) **EP 4 765 071 A1**
(43) Date of publication of application: **24.06.2026**
(21) Application number: 25224177.3
(22) Date of filing: 17.12.2025
(51) Int. Cl.: G08G 1/16, B60Q 5/00, B60Q 9/00, B60Q 1/52, B60Q 1/50

(54) **METHOD FOR GENERATING A WARNING IN A VEHICLE**

(30) Priority: 17.12.2024 GB 202418512
(71) Applicant: AUMOVIO Autonomous Mobility Germany GmbH, 85057 Ingolstadt (DE)
(72) Inventor: Kubota, Takumi, Yokohama, 221-0031 (JP); Soya, Ryuichi, Yokohama, 221-0031 (JP)
(74) Representative: Aumovio Corporation

(57) **Abstract**

According to various embodiments, there is provided a computer-implemented method for generating a warning in a vehicle, according to various embodiments. The method includes detecting a target vehicle moving towards the vehicle. The method further includes determining a probability that the target vehicle accelerated from zero velocity at a position within a predefined distance from the vehicle. The method further includes determining whether the probability exceeds a predefined threshold. The method further includes predicting a trajectory of the target vehicle by assuming that heading of the target vehicle is zero degrees relative to the vehicle, based on determining that the probability exceeds the predefined threshold. The method further includes generating a warning signal based on at least the predicted trajectory.

## Description

### TECHNICAL FIELD

The present disclosure relates to a computer-implemented method for generating a warning in a vehicle. For specifically, the method can be suitable for use in a warning against alighting from the vehicle. The present disclosure further relates to a data processing apparatus, a computer-readable medium, and a computer program which can be associated with the computer-implemented method for generating a warning in a vehicle, as well as use of the computer-implemented method for activating an occupant safe exit warning.

### BACKGROUND

Advanced Driver Assistance System (ADAS) typically use sensors and software technology to provide automation and safety functions to the driver of a vehicle. One of the safety functions is to warn of a possible collision with a moving vehicle if occupants alight the vehicle. The function is referred herein as the Occupant Safe Exit (OSE) function. The OSE function may detect approaching vehicles when an occupant of the vehicle is about the open the vehicle door, for example, to alight from a parked vehicle. The OSE function may also prevent dooring incidents where cyclists get hurt by opening car doors. The OSE function may generate a warning signal based on predicting that an approaching vehicle will pass by the vehicle that the occupant is exiting from. When the approaching vehicle starts to move from a stationary position, there may be a delay for the sensor to correctly detect the movement of the approaching vehicle. Consequently, the prediction made by the OSE function based on the sensor detection may be inaccurate or delayed. As such, there is a need to address the abovementioned problems in the OSE function.

### SUMMARY

According to various embodiments, there is provided a computer-implemented method for generating a warning in a vehicle, according to various embodiments. The method includes detecting a target vehicle 210 moving towards the vehicle. The method further includes determining a probability that the target vehicle accelerated from zero velocity at a position within a predefined distance from the vehicle. The method further includes determining whether the probability exceeds a predefined threshold. The method further includes predicting a trajectory of the target vehicle by assuming that heading of the target vehicle is zero degrees relative to the vehicle, based on determining that the probability exceeds the predefined threshold. The method further includes generating a warning signal based on at least the predicted trajectory.

According to various embodiments, there is provided a computer-readable medium. The computer-readable medium includes instructions which, when executed by a computer, cause the computer to carry out the abovementioned method for generating a warning in a vehicle.

According to various embodiments, there is provided a computer program. The computer program includes instructions which, when the computer program is executed by a computer, causes the computer to carry out the abovementioned method for generating a warning in a vehicle.

According to various embodiments, there is provided a data processing apparatus. The data processing apparatus includes means for carrying out the abovementioned method for generating a warning in a vehicle.

Additional features for advantageous embodiments are provided in the dependent claims.

### BRIEF DESCRIPTION OF THE DRAWINGS

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
FIG. 1 shows an example of a traffic scenario, where the OSE function of an ADAS may generate a warning.
FIG. 2 includes a graph and a schematic plan view of a road, to show how an OSE function generates cascading warnings, according to various embodiments.
FIG. 3 is a schematic diagram to illustrate how the OSE determines whether to generate a warning signal, according to various embodiments.
FIG. 4 is a schematic diagram to illustrate how the OSE function determines whether to generate a warning signal, according to various embodiments.
FIG. 5 shows a flow diagram of a method for generating a warning in a vehicle, according to various embodiments.

### DESCRIPTION

Embodiments described below in context of the devices are analogously valid for the respective methods, and vice versa. Furthermore, it will be understood that the embodiments described below may be combined, for example, a part of one embodiment may be combined with a part of another embodiment.

It will be understood that any property described herein for a specific device may also hold for any device described herein. It will be understood that any property described herein for a specific method may also hold for any method described herein. Furthermore, it will be understood that for any device or method described herein, not necessarily all the components or steps described must be enclosed in the device or method, but only some (but not all) components or steps may be enclosed.

The term "coupled" (or "connected") herein may be understood as electrically coupled or as mechanically coupled, for example attached or fixed, or just in contact without any fixation, and it will be understood that both direct coupling or indirect coupling (in other words: coupling without direct contact) may be provided.

In this context, the device as described in this description may include a memory which is for example used in the processing carried out in the device. A memory used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

In this context, a vehicle equipped with an OSE function being described, may be referred to as a "subject vehicle".

In order that the invention may be readily understood and put into practical effect, various embodiments will now be described by way of examples and not limitations, and with reference to the figures.

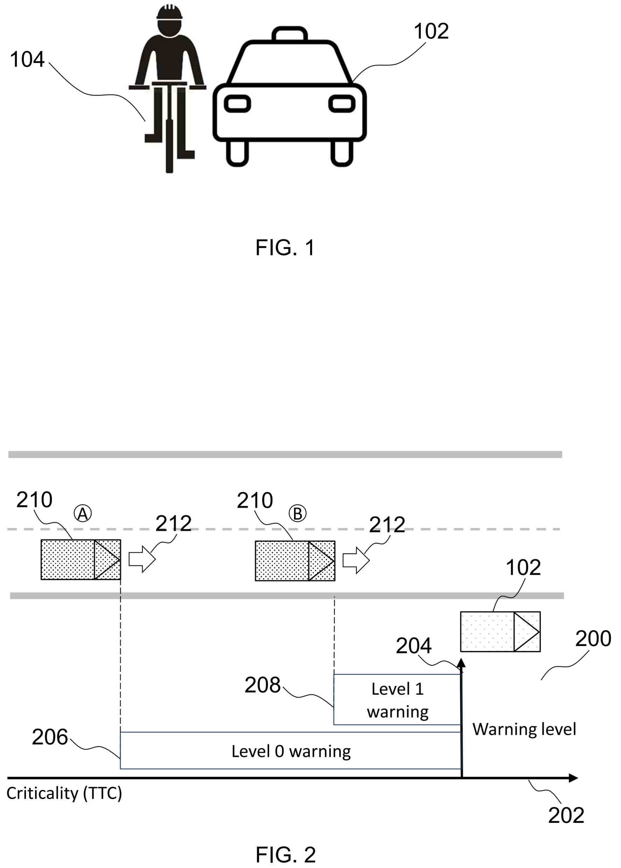

FIG. 1 shows an example of a traffic scenario, where the OSE function of an ADAS may generate a warning. In this example, a cyclist 104 is riding adjacent to a subject vehicle 102. The ADAS of the subject vehicle 102 may generate a warning to deter its occupant from opening the vehicle door. If the occupant were to open the vehicle door to alight, the vehicle door may hit the cyclist 104. In other words, a dooring incident might occur. By generating a warning to the driver or occupants of the subject vehicle 102, or by temporarily locking the vehicle doors, the OSE function may prevent a dooring incident from occurring. The OSE function may generate cascading warnings, which are described with respect to FIG. 2.

FIG. 2 includes a graph 200 and a schematic plan view of a road, to show how an OSE function generates cascading warnings, according to various embodiments. The graph 200 has a horizontal axis 202 that indicates criticality level, and a vertical axis 204 that indicates warning level. The criticality level may be associated with, or proportional to, time-to-collision (TTC). The TTC may be the time taken for the target vehicle 210 to collide with the target vehicle 102 if at least one door of the target vehicle 102 is open towards the target vehicle 210. The warning level may indicate the severity of the warning. The warning level may be associated with, or proportional to, a risk of collision.

As an example, the subject vehicle 102 may be parked on a roadside. The ADAS of the subject vehicle 102 may detect an approaching vehicle, herein referred to as a target vehicle 210. The ADAS may detect the target vehicle 210 using a perception sensor, such as one of a LiDAR, a camera, a radar, or a combination thereof. The target vehicle 210 may be travelling in a motion direction 212. The OSE function may also estimate the heading of the target vehicle 210 based on data obtained from the perception sensor. When the target vehicle 210 reaches position "A", the OSE function may compute the TTC and determine that the TTC meets a "level 0" threshold. The OSE function may thereby generate a "level 0" warning 206. When the target vehicle 210 reaches position "B", which is nearer to the subject vehicle 102, the OSE function may generate a "level 1" warning based on determining that the TTC now meets a "level 1" threshold. The "level 0" threshold may be a larger TTC number than the "level 1" threshold. The "level 1" warning may be designed to catch the attention of the driver and/or occupants of the subject vehicle 102 more so than the "level 0" warning. For example, the "level 0" warning may include a visual indication, such as a light. For example, the "level 1" warning may include an audio indication, such as a buzzing sound. The "level 0" warning may remain active when the "level 1" warning is activated, i.e. the "level 1" warning may be cascaded over the "level 0" warning.

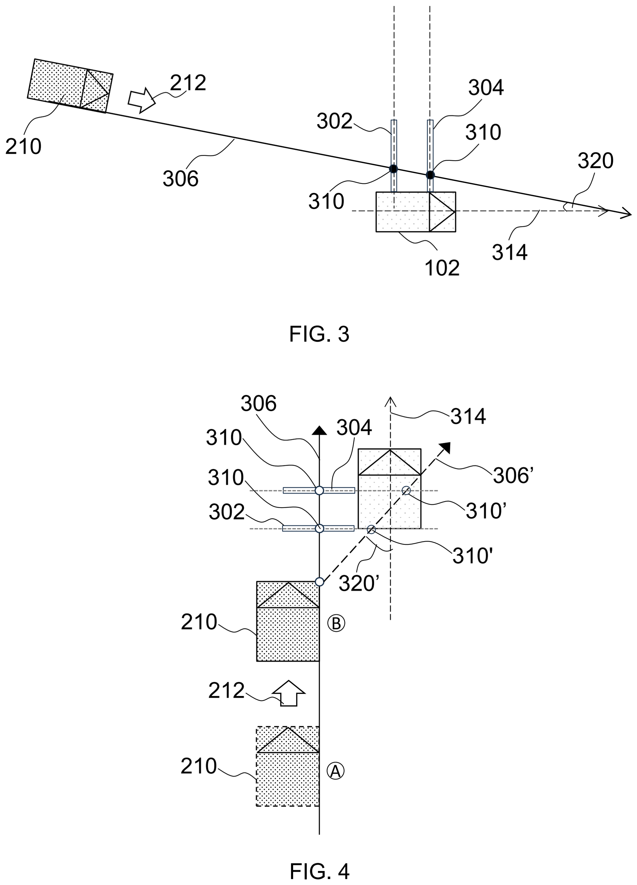

FIG. 3 is a schematic diagram to illustrate how the OSE determines whether to generate a warning signal, according to various embodiments. A first breakthrough line 302 and a second breakthrough line 304 may be predefined. Each of the first breakthrough line 302 and a second breakthrough line 304 may be straight lines. Each of the first breakthrough line 302 and a second breakthrough line 304 may extend from a side of the subject vehicle 102, in an at least substantially lateral direction. The length of each of the first breakthrough line 302 and a second breakthrough line 304 may be predefined, for example, in a range of about 1.5m to about 2m. The length of the breakthrough lines may represent a collision distance between an approaching target, such as the target vehicle 210, and passengers who alight from the subject vehicle 102.

The OSE function of the subject vehicle 102 may determine a heading 320 of the target vehicle 210 relative to the subject vehicle 102. The heading 320 of the target vehicle 210 relative to the subject vehicle 102 may be an angle between the vectors of the motion direction 212 of the target vehicle 210 and the lengthwise direction 314 of the subject vehicle 102. The OSE function may predict a trajectory 306 of the target vehicle 210 based on the heading 320. In the example shown, the trajectory 306 is parallel to the motion direction 212.

The OSE function may also determine whether the motion direction 212 intersects with both the first breakthrough line 302 and the second breakthrough line 304 based on the heading 320. This may be referred herein as the first warning condition. The intersection points between any one of the first breakthrough line 302 and the second breakthrough line 304, with the motion direction 212 are referred to herein as the predicted crossing points 310. The OSE function may also determine whether the time for the target vehicle to reach the first breakthrough line 302 is equal to, or more than, a predefined TTC threshold. This may be referred herein as the second warning condition. The OSE function may generate a warning signal if both the first and second warning conditions are fulfilled.

When the target vehicle 210 is only beginning to move from zero velocity, detection of the heading 320 may be unstable. If the unstable heading 320 measurement is used to predict the crossing points 310, the prediction may be inaccurate. As such, the OSE function may include features to address this issue, as will be explained with respect to FIG. 4.

FIG. 4 is a schematic diagram to illustrate how the OSE function determines whether to generate a warning signal, according to various embodiments. In this example, the target vehicle 210 was initially stationary at position "A" and then picked up speed. When the target vehicle 210 arrived at position "B", it was detected by the OSE function in the subject vehicle 102. As the target vehicle 210 has only just started moving, the perception sensor of the subject vehicle 102 had little time to determine its heading. The target vehicle 210 is moving almost parallel to the subject vehicle 102, in other words, its motion direction 212 is almost parallel to the lengthwise direction 314 of the subject vehicle 102.

However, the perception sensor of the subject vehicle 102 mistakenly determines the relative heading 320'. If the OSE function were to operate based on the incorrect heading 320', it may determine an incorrect motion direction 212' and accordingly determine incorrect crosspoints 310'.

To mitigate such an error, the OSE function may ignore the relative heading 320', based on determining that the target vehicle 210 started movement at a near range of the subject vehicle 102. In other words, the OSE function may assume that the heading of the target vehicle 210 relative to the subject vehicle is zero, i.e. the target vehicle 210 is moving parallel to the subject vehicle 102, when it determines that the target vehicle 210 likely accelerated from zero velocity at a position near to the subject vehicle 102. The OSE function may determine that the target vehicle 210 likely accelerated from zero velocity at a position near to the subject vehicle 102, based on criteria including the speed of the target vehicle 210, based the vehicle type of the target vehicle 210. For example, the target vehicle 210 may be more likely to have started moving in a vicinity of the subject vehicle 102 if the target speed is less than 27 kph. For example, the target vehicle 210 may be more likely to have started moving in a vicinity of the subject vehicle 102 if the target vehicle 210 is one of a car, truck, motorcycle, or bicycle. These vehicle types typically travel at high velocity, and as such the perception sensor of the subject vehicle 102 is more likely to determine its relative heading 320' incorrect.

According to various embodiments, the first and second breakthrough lines 302, 304 may intersect the subject vehicle 102 and may be at least substantially perpendicular to a lengthwise direction 314 of the subject vehicle 102. The lengthwise direction 314 may be a heading of the subject vehicle 102. The lengthwise direction 314 may be a direction connecting the rear and front of the subject vehicle 102.

According to various embodiments, the first breakthrough line 302 may be aligned with a position of the rear doors of the subject vehicle 102. The second breakthrough line 304 may be aligned with a position of the front doors of the subject vehicle 102. The first breakthrough line 302 may connect the left and right rear doors of the subject vehicle 102. The second breakthrough line 304 may connect the left and right front doors of the subject vehicle 102.

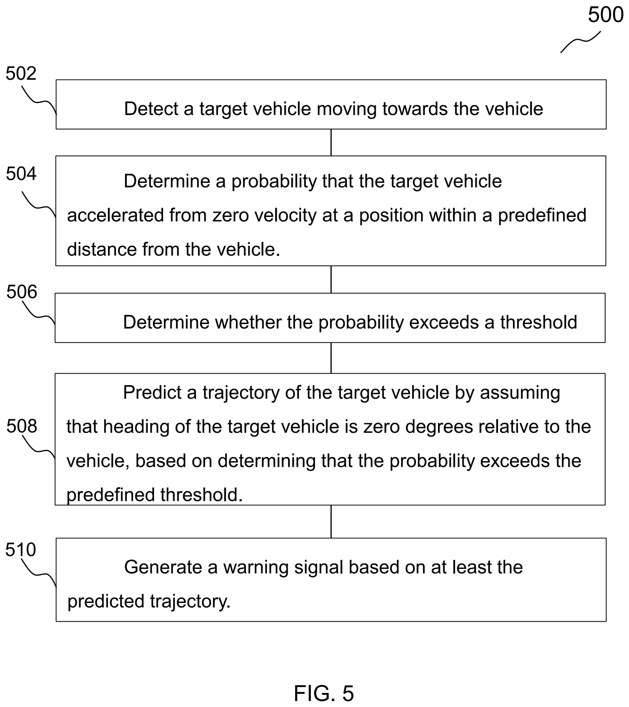

FIG. 5 shows a flow diagram of a method 500 for generating a warning in a vehicle, according to various embodiments. The method 500 may include processes 502, 504, 506, 508 and 510. The process 502 may include detecting a target vehicle 210 moving towards the vehicle. The vehicle may be the subject vehicle 102 described with respect to FIGS. 2 and 3. Detection of the target vehicle 210 may be performed using sensors such as camera, radar, and LiDAR. The process 504 may include determining a probability that the target vehicle 210 accelerated from zero velocity at a position within a predefined distance from the vehicle. The process 506 may include determining whether the probability exceeds a predefined threshold. The process 508 may include predicting a trajectory of the target vehicle by assuming that heading of the target vehicle is zero degrees relative to the vehicle, based on determining that the probability exceeds the predefined threshold. The process 510 may include generating a warning signal based on at least the predicted trajectory.

According to an embodiment which may be combined with any above-described embodiment or with any below described further embodiment, determining the probability that the target vehicle 210 accelerated from zero velocity at a position within the predefined distance from the vehicle, i.e. the process 504, may include classifying the target vehicle 210, and increasing the probability based on classifying the target vehicle 210 as one of a car, truck, motorcycle or bicycle. These vehicle types typically travel at high velocity, and are more likely to cause the OSE function to generate a delayed warning signal due to incorrect sensing of the relative heading.

According to an embodiment which may be combined with any above-described embodiment or with any below described further embodiment, the method 500 may further include determining speed of the target vehicle 210.

According to an embodiment which may be combined with any above-described embodiment or with any below described further embodiment, the speed of the target vehicle 210 may be detected using a short-range radar.

According to an embodiment which may be combined with any above-described embodiment or with any below described further embodiment, determining the probability that the target vehicle 210 accelerated from zero velocity at a position within the predefined distance from the target vehicle 210, i.e. the process 504, may include increasing the probability based on determining that the speed of the target vehicle 210 is less than a predefined speed threshold.

According to an embodiment which may be combined with any above-described embodiment or with any below described further embodiment, the method 500 may further include defining a first breakthrough line 302 and a second breakthrough line 304. Each of the first breakthrough line 302 and the second breakthrough line 304 may intersect the vehicle and may be at least substantially perpendicular to a lengthwise direction 314 of the vehicle.

According to an embodiment which may be combined with any above-described embodiment or with any below described further embodiment, generating a warning signal based on at least the predicted trajectory, i.e. the process 510, may include determining TTC between the target vehicle 210 and the vehicle. The TTC may be the time taken for the target vehicle 210 to reach the first breakthrough line 302. The process 510 may further include determining whether the predicted trajectory intersects with each of the first breakthrough line 302 and the second breakthrough line 304, and determining whether the TTC is less than a predefined threshold. The process 510 may further include generating the warning signal based on determining that the predicted trajectory intersects with each of the first breakthrough line 302 and the second breakthrough line 304, and further based on determining that the TTC is less than the predefined threshold.

According to an embodiment which may be combined with any above-described embodiment or with any below described further embodiment, the method 500 may further include deactivating the warning signal based on determining that the predicted trajectory does not intersect with the first breakthrough line 302 for at least a predefined number of cycles, wherein the target vehicle 210 is nearer to the first breakthrough line 302 than to the second breakthrough line 304.

According to an embodiment which may be combined with any above-described embodiment or with any below described further embodiment, the method 500 may further include deactivating the warning signal based on determining that the TTC is equal to or more than the predefined threshold.

According to an embodiment which may be combined with any above-described embodiment or with any below described further embodiment, the warning signal may activate an occupant safe exit (OSE) warning.

According to various embodiments, a computer-readable medium may include instructions which, when executed by a computer, cause the computer to carry out the method 500.

According to various embodiments, a computer program may include instructions which, when the computer program is executed by a computer, cause the computer to carry out the method 500.

According to various embodiments, a data processing apparatus may include means for carrying out the method 500. The data processing apparatus may include a memory, for example, the abovementioned computer-readable medium. The data processing apparatus may include a processor, or a computer configured to carry out the instructions stored in the memory.

While embodiments of the invention have been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced. It will be appreciated that common numerals, used in the relevant drawings, refer to components that serve a similar or the same purpose.

It will be appreciated to a person skilled in the art that the terminology used herein is for the purpose of describing various embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims.

## Claims

1. A computer-implemented method (500) for generating a warning in a vehicle, the method (500) comprising:
detecting a target vehicle (210) moving towards the vehicle;
determining a probability that the target vehicle (210) accelerated from zero velocity at a position within a predefined distance from the vehicle;
determining whether the probability exceeds a predefined threshold;
predicting a trajectory of the target vehicle (210) by assuming that heading of the target vehicle (210) is zero degrees relative to the vehicle, based on determining that the probability exceeds the predefined threshold; and
generating a warning signal based on at least the predicted trajectory.

2. The method (500) of claim 1, wherein determining the probability that the target vehicle (210) accelerated from zero velocity at a position within the predefined distance from the vehicle comprises
classifying the target vehicle (210), and
increasing the probability based on classifying the target vehicle (210) as one of a car, truck, motorcycle, or bicycle.

3. The method (500) of any preceding claim, further comprising:
determining speed of the target vehicle (210).

4. The method (500) of claim 3, wherein determining speed of the target vehicle (210) is performed using a short-range radar.

5. The method (500) of any one of claims 3 to 4, wherein determining the probability that the target vehicle (210) accelerated from zero velocity at a position within the predefined distance from the target vehicle (210) comprises
increasing the probability based on determining that the speed of the target vehicle (210) is less than a predefined speed threshold.

6. The method (500) of any one of claims 3 to 5, further comprising:
defining a first breakthrough line (302) and a second breakthrough line (304), each having a predefined length,
wherein each of the first breakthrough line (302) and the second breakthrough line (304) intersects the vehicle and is at least substantially perpendicular to a lengthwise direction of the vehicle.

7. The method (500) of claim 6, wherein generating a warning signal based on at least the predicted trajectory comprises
determining time-to-collision between the target vehicle (210) and the vehicle, wherein the time-to-collision is time taken for the target vehicle (210) to reach the first breakthrough line (302);
determining whether the predicted trajectory intersects with each of the first breakthrough line (302) and the second breakthrough line (304),
determining whether the time-to-collision is less than a predefined threshold; and generating the warning signal based on determining that the predicted trajectory intersects with each of the first breakthrough line (302) and the second breakthrough line (304), and further based on determining that the time-to-collision is less than the predefined threshold.

8. The method (500) of claim 7, further comprising:
deactivating the warning signal based on determining that the predicted trajectory does not intersect with the first breakthrough line (302) for at least a predefined number of cycles, wherein the target vehicle (210) is nearer to the first breakthrough line (302) than to the second breakthrough line (304).

9. The method (500) of any one of claims 7 to 8, further comprising:
deactivating the warning signal based on determining that the time-to-collision is equal to or more than the predefined threshold.

10. The method (500) of any preceding claim, wherein the warning signal activates an occupant safe exit warning.

11. A data processing apparatus comprising means for carrying out the method (500) of any preceding claim.

12. A computer-readable medium comprising instructions which, when executed by a computer, cause the computer to carry out the method (500) of any one of claims 1 to 10.

13. A computer program comprising instructions which, when the computer program is executed by a computer, cause the computer to carry out the method (500) of any one of claims 1 to 10.

14. Use of the method (500) of any one of claims 1 to 10 for activating an occupant safe exit warning.
